# EUROPEAN PATENT SPECIFICATION

(11) **EP 1 595 510 B1**
(45) Date of publication and mention of the grant of the patent: **13.06.2012**
(21) Application number: 05103974.1
(22) Date of filing: 12.05.2005
(51) Int. Cl.: A61C 1/00

(54) **Dental work station**
Zahnärztlicher Arbeitsplatz
Unité dentaire

(30) Priority: 14.05.2004 IT BO20040302
(43) Date of publication of application: 16.11.2005
(73) Proprietor: CEFLA SOC. COOP. A R.L., 40026 Imola / BO (IT)
(72) Inventor: NANNI, Eros, 40023, CASTEL GUELFO DI BOLOGNA (IT); MALUCELLI, Stefano, 48010, CANNUZZO DI CERVIA (IT)
(74) Representative: Jorio, Paolo

(56) References cited:
- US-A- 5 158 454

## Description

The present invention relates to a dental work station.

In dentistry, a work station is known comprising a patient's chair; a number of routine dental instruments, such as turbines, micromotors, water syringes, ablators, cup-filling taps; and a supply unit normally connected to the water mains and for supplying water to the dental instruments.

The supply unit normally comprises a separation tank connected hydraulically to the water mains and designed to prevent backflow of water from the supply unit to the water mains; a supply tank connected hydraulically to the dental instruments; and a storage tank mounted to receive water from the separation tank and feed it to the supply tank.

Since the three tanks must be relatively compact, known dental work stations of the type described above have various drawbacks, mainly due to the storage tank, in certain operating conditions, being insufficient to guarantee water supply from the supply tank to the dental instruments. As a result, in known dental work stations of the type described above, water supply to the cup-filling tap is normally sacrificed in favour of supply to the other dental instruments.

A further example is taught by US 5 158 454.

It is an object of the present invention to provide a dental work station designed to eliminate the aforementioned drawbacks.

According to the present invention, there is provided a dental work station as claimed in Claim 1.

A non-limiting embodiment of the present invention will be described by way of example with reference to the accompanying drawings, in which:
Figure 1 shows a schematic view in perspective of a preferred embodiment of the dental work station according to the present invention;
Figure 2 shows a schematic view of a detail in Figure 1.

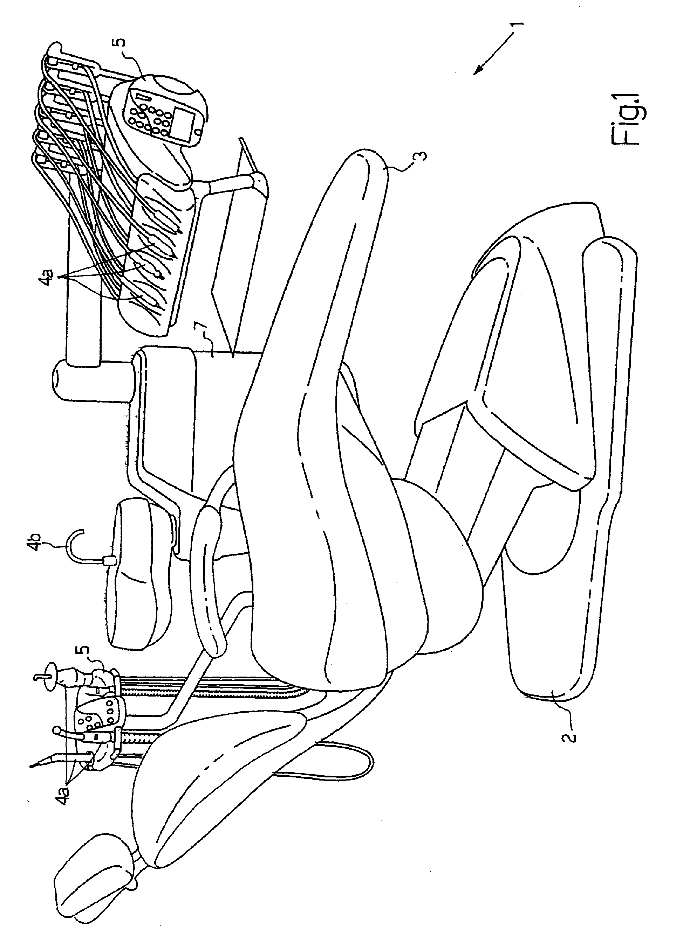

Number 1 in Figure 1 indicates as a whole a dental work station comprising a base 2; a chair 3 mounted on base 2; and a number of routine dental instruments 4 defined, for example, by turbines, micromotors, water/air syringes and/or ablators (hereinafter indicated 4a) mounted, in the example shown, on two supporting panels 5, and by a mouthwash cup-filling tap (hereinafter indicated 4b).

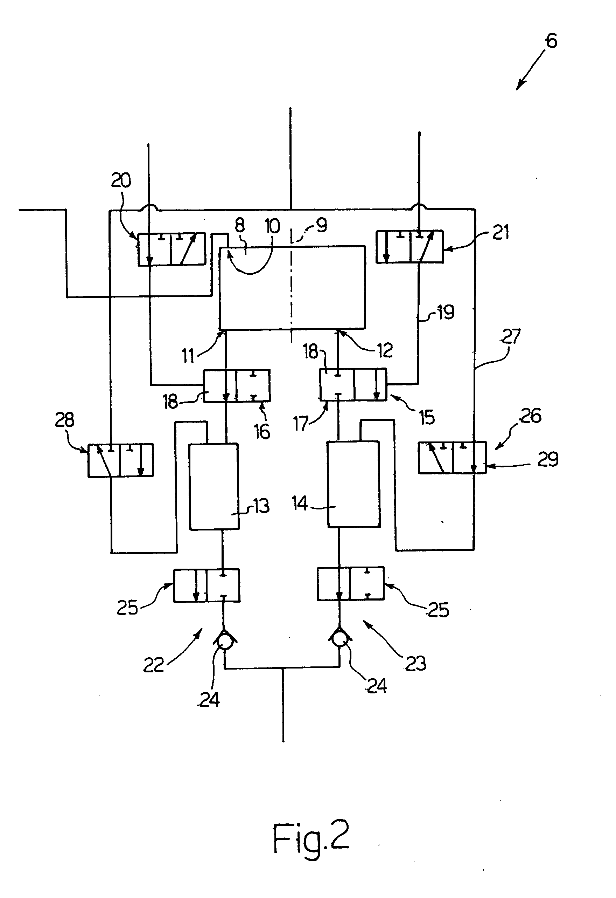

As shown in Figures 1 and 2, dental work station 1 also comprises a supply unit 6 mounted inside an upright 7 of base 2 and connected hydraulically to the water mains to supply water to instruments 4a and 4b.

With reference to Figure 2, unit 6 comprises a top, atmospheric-pressure tank 8 having a substantially vertical longitudinal axis 9, a top inlet 10 connected hydraulically to the water mains, and two bottom outlets 11 and 12 connected hydraulically to respective bottom, pressurized tanks 13, 14 mounted parallel to each other between tank 8 and instruments 4a and 4b. Tank 8 also has an overflow opening (not shown) located below inlet 10 to prevent backflow of water from unit 6 to the water mains.

Unit 6 also comprises a valve device 15 for selectively controlling water supply from tank 8 to tanks 13 and 14, and which comprises two pneumatic valves 16, 17 located between tank 8 and tanks 13 and 14 respectively. Each valve 16, 17 comprises a slide 18, which is normally maintained in a closed position (valve 17 in Figure 2) closing relative valve 16, 17 by a known spring (not shown), and is moved from the closed position to an open position (valve 16 in Figure 2) opening relative valve 16, 17 by pressurized air supplied along a pneumatic circuit 19 common to both valves 16, 17.

Air supply to valves 16, 17 is controlled selectively by two solenoid valves 20, 21 located along circuit 19 and movable between respective open positions (solenoid valve 20 in Figure 2), in which solenoid valves 20, 21 open relative valves 16, 17, and respective closed positions (solenoid valve 21 in Figure 2), in which solenoid valves 20, 21 close relative valves 16, 17.

Water supply from tanks 13, 14 to instruments 4a and 4b is controlled selectively by two valve devices 22, 23 mounted parallel to each other between tanks 13, 14 and instruments 4a and 4b, and each comprising a respective non-return valve 24, and a respective solenoid valve 25, which is mounted between relative tank 13, 14 and relative valve 24, and is movable between an open position (device 23 in Figure 2) and a closed position (device 22 in Figure 2).

Valve devices 22, 23 are associated with a pumping device 26 comprising a pneumatic circuit 27, which supplies pressurized air to tanks 13, 14 and has two solenoid valves 28, 29, each movable between an open position (solenoid valve 29 in Figure 2) and a closed position (solenoid valve 28 in Figure 2).

In a variation not shown, unit 6 also comprises a supply device for adding cleansing fluid to the water in tank 8; in which case, the water supplied to instruments 4a and 4b also contains said cleansing fluid.

Operation of supply unit 6 is easily deducible from the foregoing description, and is controlled selectively by solenoid valves 20, 21, 25, 28, 29.

With reference to Figure 2, it should be pointed out that, when tank 14 is connected hydraulically to instruments 4a and 4b by opening relative solenoid valve 25 and solenoid valve 29:
solenoid valve 21 and therefore pneumatic valve 17 are closed to separate tank 14 from tank 8;
solenoid valve 25 associated with tank 13 and solenoid valve 28 are closed to prevent water supply from tank 13 to instruments 4a and 4b; and
solenoid valve 20 and therefore pneumatic valve 16 are opened to connect tank 13 hydraulically to tank 8 and so fill tank 13 as tank 14 empties.

Once tank 14 is emptied and tank 13 filled, the above operating sequence is inverted to fill tank 14 and empty tank 13.

In certain operating conditions, instruments 4a and 4b may obviously be supplied with water simultaneously from tank 13 and tank 14.

Dental work station 1 has various advantages, mainly due to supply unit 6 being relatively compact and ensuring water supply to both instruments 4a, and tap 4b.

## Claims

1. A dental work station comprising a number of dental instruments (4a, 4b); and a supply unit (6) for supplying water to the dental instruments (4a, 4b); the supply unit (6) comprising a first tank (8) connectable hydraulically to a hydraulic water supply circuit, and a second and third storage tank (13, 14) located between the first tank (8) and the dental instruments (4a, 4b);
**characterized in that** the second and third tank (13, 14) are mounted parallel to each other.

2. A dental work station as claimed in Claim 1, wherein the first tank (8) is an atmospheric-pressure tank.

3. A dental work station as claimed in Claim 1 or 2, wherein the second and third tank (13, 14) are pressurized tanks.

4. A dental work station as claimed in any one of the foregoing Claims, and also comprising first valve means (15) for selectively connecting said second and said third tank (13, 14) to the first tank (8).

5. A dental work station as claimed in any one of the foregoing Claims, and also comprising second valve means (22, 23) for selectively connecting said second and said third tank (13, 14) to said dental instruments (4a, 4b).

6. A dental work station as claimed in any one of the foregoing Claims, and also comprising pumping means (26) for selectively feeding water from said second and said third tank (13, 14) to said dental instruments (4a, 4b).

7. A dental work station as claimed in Claim 6, wherein said pumping means (26) comprise a compressed-air circuit (27), and third valve means (28, 29) for selectively connecting the compressed-air circuit (27) to said second and said third tank (13, 14).

8. A dental work station as claimed in any one of the foregoing Claims, wherein the first tank (8) is located over said second and said third tank (13, 14) to feed water by gravity to said second and said third tank (13, 14).

9. A dental work station as claimed in any one of the foregoing Claims, wherein the supply unit (6) also comprises a supply device for adding cleansing fluid to the water.

## Patentansprüche

1. Dentaler Arbeitsplatz, aufweisend eine Anzahl von dentalen Instrumenten (4a, 4b); und eine Versorgungseinheit (6) zum Versorgten der dentalen Instrumente (4a, 4b) mit Wasser; wobei die Versorgungeinheit (6) einen ersten Behälter (8), der mit einem hydraulischen Wasserversorgungskreis hydraulisch verbindbar ist, und einen zweiten und dritten Speicherbehälter (13, 14), die sich zwischen dem ersten Behälter (8) und den dentalen Instrumenten (4a, 4b) befinden, aufweiset; **dadurch gekennzeichnet, dass** der zweite und der dritte Behälter (13, 14) parallel zueinander befestigt sind.

2. Dentaler Arbeitsplatz nach Anspruch 1, wobei der erste Behälter (8) ein atmosphärischer Druckbehälter ist.

3. Dentaler Arbeitsplatz nach Anspruch 1 oder 2, wobei der zweite und der dritte Behälter (13, 14) unter Druck stehende Behälter sind.

4. Dentaler Arbeitsplatz nach einem der vorhergehenden Ansprüche, des Weiteren aufweisend ein erstes Ventilmittel (15) zum wahlweise Verbinder des zweiten und des dritten Behälters (13, 14) mit dem ersten Behälter (8).

5. Dentaler Arbeitsplatz nach einem der vorhergehenden Ansprüche, des Weiteren aufweisend ein zweites Ventilmittel (22, 23) zum wahlweise Verbinden des zweiten und des dritten Behälters (13, 14) mit den dentalen Instrumenten (4a, 4b).

6. Dentaler Arbeitsplatz nach einem der vorhergehenden Ansprüche, und des Weiteren aufweisend ein Pumpmittel (26) zum wahrweise Zuführen von Wasser von dem zweiten und dem dritten Behälter (13, 14) zu den dentalen Instrumenten (4a, 4b).

7. Dentaler Arbeitsplatz nach Anspruch 6, wobei das Pumpmittel (26) einen Druckluftkreis (27) und ein drittes Ventilmittel (28, 29) zum wahlweise Verbinden des Druckluftkreises (27) mit dem zweiten und dem dritten Behälter (13, 14) aufweist.

8. Dentaler Arbeitsplatz nach einem der vorhergehenden Ansprüche, wobei der erste Behälter (8) sich über dem zweiten und dem dritten Behälter (13, 14) befindet, um Wasser aufgrund der Schwerkraft dem zweiten und dem dritten Behälter (13, 14) zuzuführen.

9. Dentaler Arbeitsplatz nach einem der vorhergehenden Ansprüche, wobei die Versorgungseinheit (6) ebenso eine Versorgungsvorrichtung zum Hinzufügen eines Reinigungsfluids zu dem Wasser aufweist.

## Revendications

1. Poste de travail dentaire comprenant un certain nombre d'instruments dentaires (4a, 4b) ; et une unité d'alimentation (6) permettant d'alimenter les instruments dentaires (4a, 4b) en eau ; l'unité d'alimentation (6) comprenant un premier réservoir (8) pouvant être raccordé hydrauliquement à un circuit hydraulique d'alimentation en eau, et un deuxième et un troisième réservoirs de stockage (13, 14) situés entre le premier réservoir (8) et les instruments dentaires (4a, 4b) ; **caractérisé en ce que** les deuxième et troisième réservoirs (13, 14) sont montés parallèles l'un à l'autre.

2. Poste de travail dentaire selon la revendication 1, dans lequel le premier réservoir (8) est un réservoir à pression atmosphérique.

3. Poste de travail dentaire selon la revendication 1 ou 2, dans lequel les deuxième et troisième réservoirs (13, 14) sont des réservoirs sous pression.

4. Poste de travail dentaire selon l'une quelconque des revendications précédentes, et comprenant également un premier moyen de clapet (15) pour raccorder sélectivement lesdits deuxième et troisième réservoirs (13, 14) au premier réservoir (8).

5. Poste de travail dentaire selon l'une quelconque des revendications précédentes, et comprenant également un deuxième moyen de clapet (22, 23) pour raccorder sélectivement lesdits deuxième et troisième réservoirs (13, 14) auxdits instruments dentaires (4a, 4b).

6. Poste de travail dentaire selon l'une quelconque des revendications précédentes, et comprenant également un moyen de pompage (26) pour fournir sélectivement de l'eau provenant desdits deuxième et troisième réservoirs (13, 14) auxdits instruments dentaires (4a, 4b).

7. Poste de travail dentaire selon la revendication 6, dans lequel ledit moyen de pompage (26) comprend un circuit à air comprimé (27), et un troisième moyen de clapet (28, 29) pour raccorder sélectivement le circuit à air comprimé (27) audit deuxième et audit troisième réservoirs (13, 14).

8. Poste de travail dentaire selon l'une quelconque des revendications précédentes, dans lequel le premier réservoir (8) est situé au-dessus dudit deuxième et dudit troisième réservoir (13, 14) pour fournir de l'eau par gravité audit deuxième et audit troisième réservoir (13, 14).

9. Poste de travail dentaire selon l'une quelconque des revendications précédentes, dans lequel l'unité d'alimentation (6) comprend également un dispositif d'alimentation permettant d'ajouter un fluide de nettoyage à l'eau.
